# EUROPÄISCHE PATENTSCHRIFT

(11) **EP 2 368 143 B1**
(45) Veröffentlichungstag und Bekanntmachung des Hinweises auf die Patenterteilung: **16.01.2013**
(21) Anmeldenummer: 09806170.8
(22) Anmeldetag: 16.12.2009
(51) Int. Cl.: G01V 8/14, G01V 8/20

(54) **LICHTSCHRANKE**
LIGHT BARRIER
BARRIÈRE LUMINEUSE

(30) Priorität: 24.12.2008 DE 102008063080
(43) Veröffentlichungstag der Anmeldung: 28.09.2011
(73) Patentinhaber: Pantron Instruments GmbH, 31162 Bad Salzdetfurth (DE)
(72) Erfinder: OTTLEBEN, Bernd, 31162 Bad Salzdetfurth (DE); OTTLEBEN, Petra, 31162 Bad Salzdetfurth (DE)
(74) Vertreter: Lins, Edgar
(86) Internationale Anmeldenummer: PCT/DE2009/001774
(87) Internationale Veröffentlichungsnummer: WO 2010/072200

(56) Entgegenhaltungen:
- EP-A2- 1 296 161
- EP-A2- 1 933 172
- DE-A1- 2 805 423
- DE-A1- 4 439 838
- DE-A1-102004 022 408
- DE-A1-102005 059 859
- JP-A- 58 180 973

## Beschreibung

Die Erfindung betrifft eine Lichtschranke mit einem Sender für einen Lichtstrahl und wenigstens einem zugehörigen Empfänger und mit einer Lichtstrecke, die zwischen einer ersten Seite und einer zweiten Seite eines zu überwachenden Bereichs verläuft, wobei sich Sender und Empfänger auf der ersten Seite befinden und auf der zweiten Seite eine den von dem Sender ausgesandten primären Lichtstrahl aufnehmende Optik angeordnet ist, mit der der primäre Lichtstrahl umgelenkt und als von dem primären Lichtstrahl separater sekundärer Lichtstrahl mit Abstand zu dem primären Lichtstrahl über die Lichtstrecke zur ersten Seite auf den Empfänger zurückgesandt wird.

Eine derartige Lichtschranke ist beispielsweise aus der DE 28 05 423 bekannt.

Derartige Lichtschranken sind in zahlreichen Ausführungsformen bekannt. Sie können dabei in ganz unterschiedlichen Größen ausgeführt sein und ganz unterschiedliche Zwecke erfüllen. So wird beispielsweise die Kontur eines Kraftfahrzeugs innerhalb einer Autowaschanlage mit Hilfe von entsprechend beweglich angeordneten Lichtschranken abgetastet, um eine möglichst effektive Trocknung des Fahrzeugs mit möglichst geringem Luft- und Energieaufwand zu gewährleisten. Bekannt ist es ferner, sehr kleine Lichtschranken in Form von sogenannten Gabellichtschranken auszubilden, bei denen sich die Lichtstrecke zwischen zwei Schenkeln eines Gehäuses erstreckt. Derartige Lichtschranken dienen beispielsweise als Kantendetektoren in Produktionsmaschinen, in denen bahnförmige Materialien genau positioniert transportiert werden. Wird für eine derartige Gabellichtschranke ein größerer Schenkelabstand benötigt, wird die Gabellichtschranke durch eine andere Gabellichtschranke ersetzt, deren Gehäuse den benötigten Schenkelabstand aufweist und in dem die Stromzuführung zu dem Sender in dem einen Schenkel und dem Empfänger in dem anderen Schenkel in geeigneter Weise verlegt ist. Der Einsatz unterschiedlich großer Lichtschranken an einer Einsatzstelle erweist sich somit als umständlich und bezüglich der Handhabung und Vorratshaltung als aufwändig.

Aus der EP 1 933 172 A1 und der DE 10 2004 022 408 A1 sind ebenfalls gattungsgemäße Lichtschranken bekannt. Problematisch bei dieser Art Lichtschranken ist die Justierung der ersten Seite und der zweiten Seite zueinander, so dass der vom Sender ausgesandte primäre Lichtstrahl optimal von der Optik aufgenommen und von der Optik so als sekundärer Lichtstrahl zurückgesandt werden kann, dass er in optimaler Weise auf den Empfänger trifft. Um dies zu gewährleisten oder zumindest zu vereinfachen wird im Stand der Technik vorgeschlagen, die beiden Umlenkelemente der umlenkenden Optik beispielsweise als Endkappen auf einem Hohlleiter vorzusehen. Dadurch ist eine einfache Justage und eine vereinfachte Herstellung gewährleistet. Ein weiteres Problem besteht in der Reflektion des Lichtstrahls in dem Bereich der zweiten Seite zwischen den beiden Umlenkspiegeln. Um dieses Problem zu beheben, wird vorgeschlagen, zwischen den Umlenkspiegeln einen rohrartigen Anteil anzuordnen, der mit einem reflexionsmindernden Faltteil ausgekleidet ist.

Aus der EP 1 296 191 A2 ist ein Lichtgitter bekannt, bei dem der Lichtstrahl, der vom Sender auf der ersten Seite ausgesandt wird, zwischen den Umtenkspiegeln auf der zweiten Seite durch wenigstens einen Strahlteiler läuft und so in wenigstens zwei Strahlen aufgespalten wird. Diese bilden dann zwei sekundäre Lichtstrahlen, so dass ein noch größerer Bereich durch die Lichtschranke überwacht werden kann.

Aus der JP 58 180 973 A ist eine Lichtschranke bekannt, bei der der Lichtstrahl wenigstens viermal zwischen der ersten Seite und der zweiten Seite hin und her gesandt wird. Auch dadurch lässt sich ein relativ großer Bereich mit nur einem einzigen Sender und Empfänger abdecken.

Aus der DE 44 39 838 A1 ist eine der bereits genannten sehr kleinen Gabellichtschranken bekannt, bei denen sich der Sender auf der ersten Seite und der Empfänger auf der zweiten Seite befindet. Beide Seiten befinden sich in jeweils einem Schenkel eines Gehäuses. Soll der Abstand zwischen den beiden Schenkeln verändert werden, müssen die beiden Schenkel auseinander montiert und nach der Montage von Zwischenstücken wieder aneinander befestigt werden.

Die DE 10 2005 059 859 A1 offenbart eine ähnliche Gabellichtschranke. Der Abstand zwischen den beiden Schenkeln des Gehäuses ist jedoch beispielsweise über ein teleskopartigen Anteil des Gehäuses einstellbar.

Der Erfindung liegt die Aufgabe zugrunde, eine Lichtschranke der eingangs erwähnten Art so auszubilden, dass sie flexibel aufbaubar und für unterschiedliche Einsatzzwecke einsetzbar ist.

Zur Lösung dieser Aufgabe ist erfindungsgemäß eine Lichtschranke der eingangs erwähnten Art dadurch gekennzeichnet, dass der Abstand zwischen den beiden Seiten der Lichtstrecke veränderbar ist und dass beide Seiten der Lichtstrecke auf Schenkeln eines gemeinsamen Gehäuses implementiert sind, deren Abstand voneinander einstellbar ist.

Die erfindungsgemäße Lichtschranke weist somit einen Aufbau auf, durch den der von dem Sender ausgesandte Lichtstrahl über die Lichtstrecke auf eine Optik auf der anderen Seite des zu überwachenden Bereichs gelangt und dort so umgelenkt wird, dass von der zweiten Seite zur ersten Seite ein sekundärer Strahl zurückgesandt wird, der mit einem Abstand zu dem primären Lichtstrahl verläuft. Dabei ist es möglich, dass für die Lichtschrankenfunktion nur der sekundäre Lichtstrahl ausgenutzt wird. In diesem Fall kann der primäre Lichtstrahl an einer Stelle über die Lichtstrecke verlaufen, die für Störungen des Lichtstrahls unempfindlich ist. Beispielsweise kann der primäre Lichtstrahl auch innerhalb einer schlauch- oder rohrförmigen Schutzanordnung verlaufen.

Alternativ hierzu kann auch der primäre Lichtstrahl für die Lichtschrankenfunktion ausgenutzt werden, indem der Empfänger eine Unterbrechung des primären Lichtstrahls oder des sekundären Lichtstrahls detektiert.

In einer bevorzugten Ausführungsform der Erfindung weist die auf der zweiten Seite angeordnete Optik eine Fokussierungseinrichtung für den sekundären Lichtstrahl auf. Auf diese Weise wird eine hohe Signalstärke für den Empfänger bereitgestellt, sodass ein hohes Signal-RauschVerhältnis für die Lichtschrankenfunktion erzielt wird.

In einer Variante der Erfindung kann die Optik auf der zweiten Seite eine Aufweitungseinrichtung zur Ausbildung eines aufgeweiteten sekundären Lichtstrahls enthalten. Dadurch kann eine Lichtschrankenüberwachung für einen im Querschnitt flächigen Überwachungsbereich erfolgen, wobei der Empfänger auf der ersten Seite vorzugsweise eine Sammellinsenanordnung aufweist. Eine Unterbrechung nur eines Teils der Fläche des Lichtstrahls führt dann im Empfänger zu einer Amplitudenverringerung, die im Empfänger als Messsignal ausgewertet werden kann.

Ferner kann der Empfänger in einer derartigen Anordnung als flächig empfindlicher Empfänger ausgebildet sein, sodass die Position der Teilunterbrechung des aufgeweiteten Lichtstrahls im Empfänger feststellbar ist. Der Empfänger kann dabei beispielsweise ein Fototransistor-Array aufweisen.

Die erfindungsgemäße Anordnung hat generell den Vorteil, dass sich die elektronischen Komponenten, die einer Stromversorgung und ggf. einer Signalleitung bedürfen, auf derselben Seite des zu überwachenden Bereichs befinden. Bei einer Gabellichtschranke befinden sich diese Komponenten in demselben Schenkel des Gehäuses. Dadurch wird eine umständliche Kabelverlegung, insbesondere bei längeren Lichtstrecken, vermieden. Ein besonderer Vorteil entsteht dadurch, dass wegen der Anordnung von Sender und Empfänger auf derselben Seite des zu überwachenden Bereichs eine kompakte Regelung der Intensität des vom Sender ausgesandten Lichtstrahls in Abhängigkeit von der Intensität des vom Empfänger empfangenen Lichtstrahls ermöglicht wird. Für diese Regelung ist es daher erfindungsgemäß nicht erforderlich, ein Regelsignal vom Empfänger zum Sender über die Lichtstrecke zu übertragen. Erfindungsgemäß ist daher in einer bevorzugten Ausführungsform auf der ersten Seite eine Regelstufe angeordnet, mit der die Intensität des vom Sender ausgesandten Primärstrahls in Abhängigkeit von der Intensität des vom Empfänger empfangenen Sekundärstrahls steuerbar ist.

Die erfindungsgemäße Lichtschranke erlaubt ferner dass durch die den primären Lichtstrahl empfangene Optik auf der zweiten Seite durch Strahlteileranordnungen eine Mehrzahl von sekundären Lichtstrahlen generiert wird, die vorzugsweise parallel zueinander auf die erste Seite zurückgeleitet werden. Dabei kann für jeden sekundären Lichtstrahl ein eigener Empfänger auf der ersten Seite vorgesehen sein. Es ist aber auch möglich, die auf der zweiten Seite generierten verschiedenen sekundären Lichtstrahlen auf einen gemeinsamen Empfänger zu leiten, der entweder eine ausreichend große empfindliche Fläche aufweist oder im Wesentlichen als Punktempfänger ausgebildet ist, für den die sekundären Lichtstrahlen die Lichtstrecke schräg zueinander durchlaufen, sodass alle sekundären Lichtstrahlen auf denselben Empfänger auftreffen und sich optisch addieren. Dabei geht allerdings eine Information über den durch einen Gegenstand unterbrochenen sekundären Lichtstrahl verloren, sodass die parallele Anordnung der sekundären Lichtstrahlen und eine Empfängeranordnung, die jeden sekundären Lichtstrahl differenziert detektieren kann, im Allgemeinen bevorzugt ist. Der Empfänger weist somit vorzugsweise eine Mehrzahl von Teilempfängern für jeweils einen sekundären Lichtstrahl auf.

Umgekehrt ermöglicht die vorliegende Erfindung auch eine Ausbildung mit mehreren primären Lichtstrahlen, die auf der zweiten Seite zu einem gemeinsamen sekundären Lichtstrahl zusammengefasst werden.

Die Erfindung ermöglicht die einfache Ausbildung einer Gabellichtschranke, deren Schenkelabstand variierbar ist. Da die Verkabelung nur in einem Schenkel erfolgen muss, kann eine teleskopische Verstellung des Abstandes des anderen Schenkels unproblematisch erfolgen, weil keine Kabel oder Leitungen mitgeführt werden müssen. Eine derartige Gabellichtschranke kann mit mehreren sekundären Lichtschranken für eine differenzierte Überwachung, beispielsweise der momentanen Position des Randes einer Materialbahn, eingesetzt werden und ist somit beispielsweise für die Kantenüberwachung auch unterschiedlich breiter Materialbahnen geeignet. Ferner ist es denkbar, dass Erreichen einer Position des Randes der Materialbahn anzuzeigen und beilspielsweise ein Alarm auszulösen, wenn eine andere Position innerhalb der Lichtschranke durch die Kante der Materialbahn erreicht wird.

Zur Erläuterung der Erfindung werden die gebräuchlichen Ausdrücke "Lichtschranke" und "Lichtstrahl" verwendet, ohne dass hierdurch eine Einschränkung auf sichtbares Licht erfolgen soll. Selbstverständlich kann der "Lichtstrahl" im Sinne der Erfindung auch eine Wellenlänge außerhalb des sichtbaren Lichts aufweisen, also beispielsweise ein Infrarot- oder Ultraviolett-Strahl sein. Die Eignung entsprechender Sender und Empfänger für die Ausbildung einer "Lichtschranke" hängt vom jeweiligen Einsatzzweck ab und ist dem Fachmann ohne weiteres bekannt.

Die Erfindung soll im Folgenden anhand von in der Zeichnung dargestellten Ausführungsbeispielen näher erläutert werden. Es zeigen:
- Figur 1: eine schematische Darstellung einer erfindungsgemäßen Lichtschranke;
- Figur 2: eine schematische Darstellung möglicher Anordnungen auf der ersten Seite und auf der zweiten Seite;
- Figur 3: eine schematische Darstellung einer ersten Ausführungsform einer Gabellichtschranke;
- Figur 4: eine schematische Darstellung einer Gabellichtschranke mit einem einem primären Lichtstrahl und mehreren sekundären Lichtstrahlen oder mehreren primären Lichtstrahlen und einem sekundären Lichtstrahl;
- Figur 5: eine schematische Darstellung einer Gabellichtschranke gemäß Figur 3 zur Aussendung eines aufgeweiteten primären Lichtstrahls;
- Figur 6: ein Ausführungsbeispiel einer Lichtschranke in einem Gehäuse, in einer Verwendung mit aufgeweiteten Lichtstrahlen;
- Figur 7: ein anderes Ausführungsbeispiel einer Lichtschranke mit einem aufgeweiteten Lichtstrahl;
- Figur 8: eine schematische Darstellung des Aufbaus einer Autowaschanlage mit zahlreichen Lichtschranken;
- Figur 9: eine schematische Darstellung der Ausbildung einer Lichtschranke zur Abtastung der Kontur eines Kraftfahrzeugs in einer Autowaschanlage;
- Figur 10: eine schematische Darstellung der Ausbildung einer Lichtschrankenanordnung zur Erkennung einer Fahrzeugposition in einer Waschanlage.

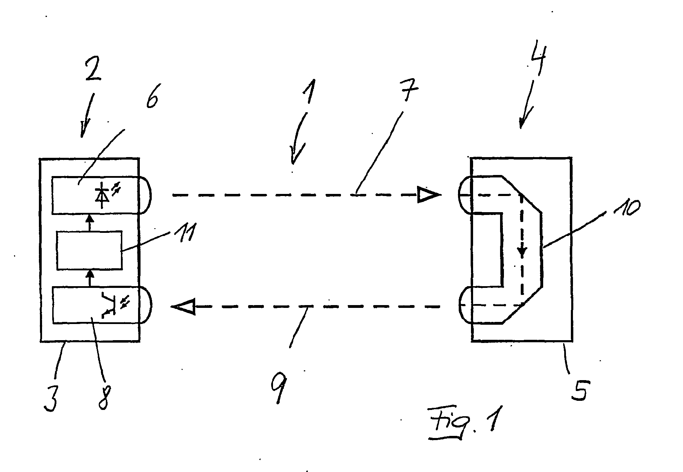

Figur 1 verdeutlicht schematisch eine Lichtstrecke 1, die durch einen zu überwachenden Bereich verläuft und auf einer ersten Seite 2 von einem ersten Teil 3 und auf einer zweiten Seite 4 von einem zweiten Teil 5 einer Lichtschranke begrenzt wird.

Der erste Teil 3 der Lichtschranke enthält einen Sender 6 zur Ausstrahlung eines primären Lichtstrahls 7 und einen versetzt zu dem Sender 6 angeordneten Empfänger 8 zum Empfang eines sekundären Lichtstrahls 9.

Der zweite Teil 5 der Lichtschranke enthält keine elektronischen Bauelemente sondern lediglich eine Optik 10, die der Umlenkung des primären Strahls 7 dient, durch die der Lichtstrahl als sekundärer Lichtstrahl 9 mit Abstand von dem ersten Lichtstrahl 7 auf den ersten Teil 3 der Lichtschranke zurückgesandt wird. In dem dargestellten Ausführungsbeispiel verlaufen primärer Lichtstrahl 7 und sekundärer Lichtstrahl 9 parallel zueinander.

Zwischen dem Sender 6 und dem Empfänger 8 befindet sich in dem ersten Teil 3 der Lichtschranke eine Auswerte- und Regelstufe 11, mit der die eigentliche Lichtschrankenfunktion ausgeführt werden kann, indem die Auswerte- und Regelstufe 11 feststellt, ob der sekundäre Lichtstrahl 9 durch einen Gegenstand unterbrochen worden ist. Darüber hinaus kann die Auswerte- und Regelstufe 11 ferner die Intensität des vom Empfänger 8 empfangenen sekundären Lichtstrahls 9 feststellen und in Abhängigkeit von der festgestellten Intensität des sekundären Lichtstrahls 9 die Intensität des vom Sender 6 ausgesandten primären Lichtstrahls 7 einstellen. Auf diese Weise wird verhindert, dass durch einen zu starken oder zu schwachem primären Lichtstrahl 7 die Auswertung der Lichtschrankenfunktion durch die Auswerte- und Regelstufe 11 beeinträchtigt wird. die Auswerte- und Regelstufe 11 ist somit in der Lage, den Sender 6 so zu regeln, dass am Empfänger 8 ein gut auswertbares Signal mit einer Intensität innerhalb eines vorgegebenen Intensitätsintervalls ankommt. Auf der ersten Seite 2 kann ferner eine (nicht dargestellte) Schaltstufe vorgesehen sein, mit der der Lichtstrahl 7 vom Sender 6 abschnittsweise oder in gepulster Form ausgesandt werden kann. Der Empfänger 8 bzw. die Auswerte- und Regelstufe 11 kann dabei von der Schaltstufe mit entsprechenden Schaltsignalen angesteuert werden, um nur während der ausgesandten Lichtstrahlen 7 sekundäre Lichtstrahlen 9 zu empfangen bzw. auszuwerten.

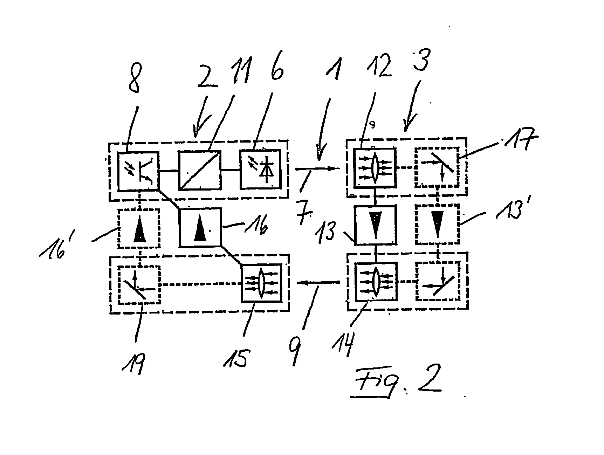

Figur 2 zeigt mehrere Ausführungsmöglichkeiten der erfindungsgemäßen Lichtschranke. Der von dem Sender 6 auf der ersten Seite 2 der Lichtstrecke 1 ausgesandte primäre Lichtstrahl 7 gelangt auf der zweiten Seite 3 auf eine Sammellinse 12, mit der das Licht in einen Lichtleiter 13 eingekoppelt wird. Mit dem Lichtleiter wird die Umlenkung des primären Lichtstrahls 7 auf der zweiten Seite 3 vorgenommen. Am Ausgang des Lichtleiters 13 befindet sich eine konkave Linse 14, mit der der sekundäre Lichtstrahl 9 durch Aufweitung geformt wird. Der sekundäre Lichtstrahl 9 trifft auf eine Sammellinse 15 auf der ersten Seite 2 auf und kann wiederum in einen Lichtleiter 16 zur Führung des sekundären Lichtstrahls 9 zu dem Empfänger 8 auf der ersten Seite 2 eingekoppelt werden. Zwischen dem Empfänger 8 und dem Sender 6 ist die Auswerte- und Regelstufe 11 angeordnet, wie dies anhand der Figur 1 beschrieben worden ist.

Der erläuterte Aufbau ist in Figur 2 mit durchgezogenen Linien dargestellt, während eine denkbare alternative Ausführungsform mit gestrichelt eingezeichneten Stufen verdeutlicht ist. Danach gelangt der primäre Lichtstrahl 7 über die Sammellinse 12 auf der zweiten Seite 3 auf einen Umlenkspiegel 17 und kann dann in einen Lichtleiter 13' eingekoppelt werden. Dieser Lichtleiter 13' kann ggf. auch entfallen. Über einen weiteren Umlenkspiegel 18 wird der Lichtstrahl erneut um 90° umgelenkt und trifft auf die konkave Linse 14. In entsprechender Weise kann auf der ersten Seite 2 der sekundäre Lichtstrahl 9 nach dem Durchlaufen der Sammellinse 15 auf einen Umlenkspiegel 19 geleitet werden, um auf den Empfänger 8 gerichtet zu werden. Ggf. kann der Lichtstrahl über einen Lichtleiter 16' zum Empfänger 8 geleitet werden.

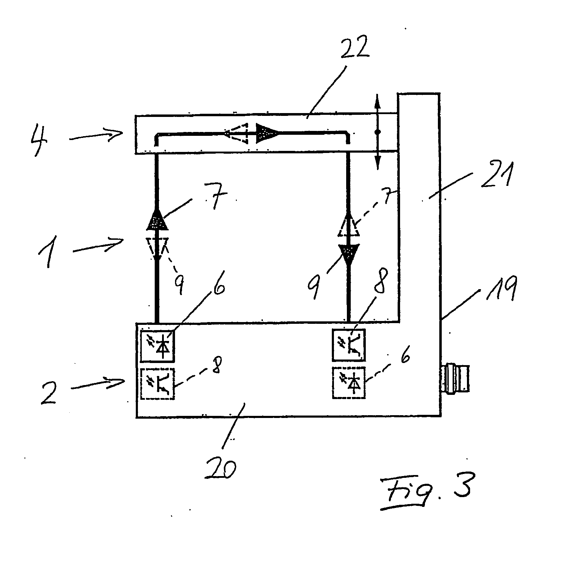

Bei dem in Figur 3 dargestellten Ausführungsbeispiel wird eine Lichtschranke durch ein Gehäuse 19 gebildet, das L-förmig mit zwei Schenkeln 20, 21 ausgebildet ist.

Der erste Schenkel 20 enthält die elektronischen Bauelemente, während der zweite Schenkel 21 verschiebbar ein Gehäuseteil 22 trägt, in dem sich die (hier nicht dargestellte) Optik 10 zum Umlenken des Lichtstrahls befindet.

In Figur 3 ist schematisch angedeutet, dass Sender 6 und Empfänger 8 in dem ersten Schenkel 20 angeordnet sind, sodass der Schenkel 20 die erste Seite 2 der zwischen dem ersten Schenkel 20 und dem Gehäuseteil 22 befindlichen Lichtstrecke 1 bildet. Der Sender 6 strahlt den primären Lichtstrahl 7 ab, der in dem Gehäuseteil 22 umgelenkt und als sekundärer Lichtstrahl 9 auf den Empfänger 8 zurückgeleitet wird. Aus Gründen der Übersichtlichkeit ist die auch hier vorhandene Auswerte- und Regelstufe 11 nicht eingezeichnet.

Durch gestrichelt eingezeichnete Elemente für Sender 6 und Empfänger 8 und einen entsprechend umgekehrten Strahlengang mit dem primären Lichtstrahl 7 und dem sekundären Lichtstrahl. 9 ist in Figur 3 angedeutet, dass die Standorte für den Sender 6 und den Empfänger 8 innerhalb des ersten Schenkels 20 auch vertauscht sein können.

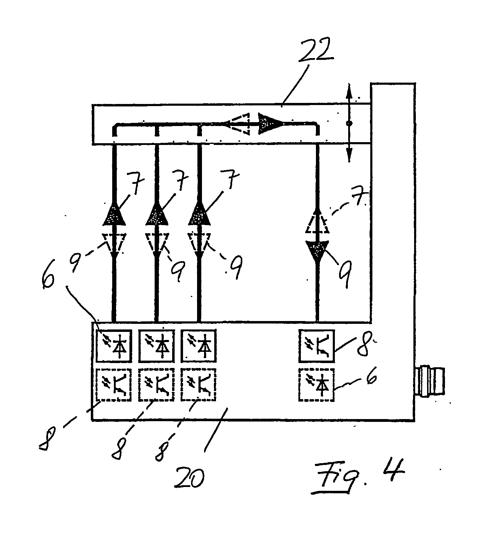

Bei dem in Figur 4 dargestellten Ausführungsbeispiel, dessen mechanischer Aufbau dem des Ausführungsbeispiels aus Figur 3 entspricht, sind in dem ersten Schenkel 20 drei Sender 6 vorgesehen, die somit drei primäre Lichtstrahlen 7 aussenden. Die drei Lichtstrahlen werden in der Optik in dem Gehäuseteil 22 zusammengeführt und als ein sekundärer Lichtstrahl 9 auf den Empfänger 8 zurückgeleitet, wie dies in Figur 4 mit durchgezogenen Kästchen dargestellt ist.

Mit den drei primären Lichtstrahlen kann die Lichtschrankenfunktion über einen gewissen Bereich durchgeführt werden, wobei der dargestellte Aufbau einer Gabellichtschranke mit einem in seinem Abstand zum ersten Schenkel 20 veränderbaren Gehäuseteil 22 vorteilhaft ist. Die Auswertung des vom Empfänger 8 empfangenen sekundären Lichtstrahls 9 kann durch Erkennung der empfangenen Intensität erfolgen und Aufschluss darüber geben, ob nur einer der primären Lichtstrahlen 7, zwei der primären Lichtstrahlen 7 oder alle drei der primären Lichtstrahlen 7 durch einen Gegenstand innerhalb der Gabellichtschranke unterbrochen worden sind. Wenn dabei auch noch detektiert werden soll, welcher der drei primären Lichtstrahlen ggf. unterbrochen worden ist, kann die Aussendung der drei primären Lichtstrahlen 7 mit den Sendern 6 in Multiplexform erfolgen, wobei die in dem ersten Schenkel 20 enthaltene (nicht dargestellte) Auswerte- und Regelstufe 11 über die Information verfügt, welcher der drei primären Lichtstrahlen 7 innerhalb eines bestimmten Zeitfensters ausgesandt worden ist. Die Wechselfrequenz zwischen den ausgesandten primären Lichtstrahlabschnitten kann dabei so hoch sein, dass für die Lichtschrankenfunktion praktisch kontinuierliche primäre Lichtstrahlen 7 ausgesandt werden, obwohl die Auswerte- und Regelstufe 11 aufgrund der jeweiligen Zeitfenster die drei primären Lichtstrahlen 7 unterscheiden kann, auch wenn nur ein sekundärer Lichtstrahl 9 generiert wird.

Figur 4 zeigt mit gestrichelten Kästchen, dass auch hier der umgekehrte Strahlengang möglich ist, indem ein Sender 6 einen primären Lichtstrahl 7 aussendet, der in der (nicht dargestellten) Optik 10 im Gehäuseteil 22 in drei sekundären und zueinander parallel verlaufende Lichtstrahlen 9 aufgeteilt wird. In diesem Fall können im ersten Schenkel 20 des Gehäuses 19 drei Empfänger 8 vorgesehen sein, die jeweils einem der sekundären Lichtstrahlen 9 zugeordnet sind. Als Messstrahlen dienen hierbei in erster Linie die sekundären Lichtstrahlen 9. Allerdings ist auch die Ausnutzung des primären Lichtstrahls 7 als Messlichtstrahl nicht ausgeschlossen.

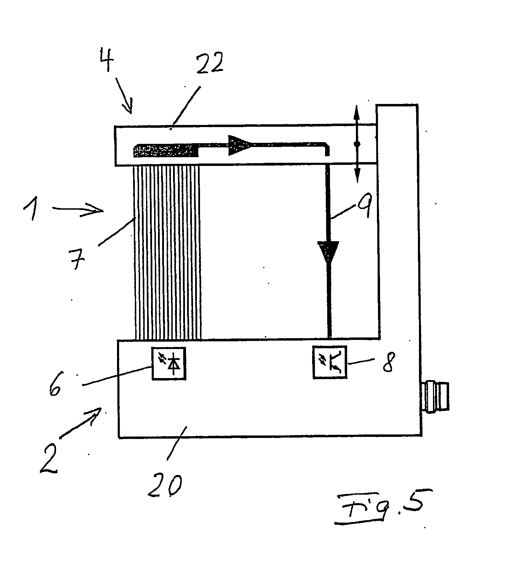

Figur 5 zeigt ein Ausführungsbeispiel, das dem anhand der Figur 3 dargestellten Ausführungsbeispiel entspricht, wobei lediglich der vom Sender 6 ausgesandte primäre Lichtstrahl 7 durch eine (nicht dargestellte) Zerstreuungsoptik zu einem aufgeweiteten parallelen Lichtstrahl geformt ist. In dem Gehäuseteil 22 auf der zweiten Seite 4 wird der aufgeweitete Lichtstrahl 7 durch eine Fokussierungsoptik wieder zu einem schmalen Lichtstrahl zusammengefasst und in dem Gehäuseteil 22 umgelenkt, um als schmaler sekundärer Lichtstrahl 9 wieder auf den Empfänger 8 auf der ersten Seite 2 zurückgeleitet zu werden. Durch die Aufweitung des primären Lichtstrahls 7 erfasst dieser einen größeren Querschnitt der Lichtstrecke 1. Durch eine analoge Auswertung der Amplitude des vom Sender 8 empfangenen sekundären Lichtstrahls 9 kann dabei festgestellt werden, zu welchem Anteil der aufgeweitete Lichtstrahl 7 durch einen Gegenstand ggf. unterbrochen worden ist. Hierdurch können Rückschlüsse auf die Größe des den Lichtstrahl 7 unterbrechenden Objekts, auf die Position des Objekts zwischen dem Schenkel 20 und dem Gehäuseteil 22 gezogen werden, wie sich dies aus dem jeweiligen Anwendungsfall ergeben kann.

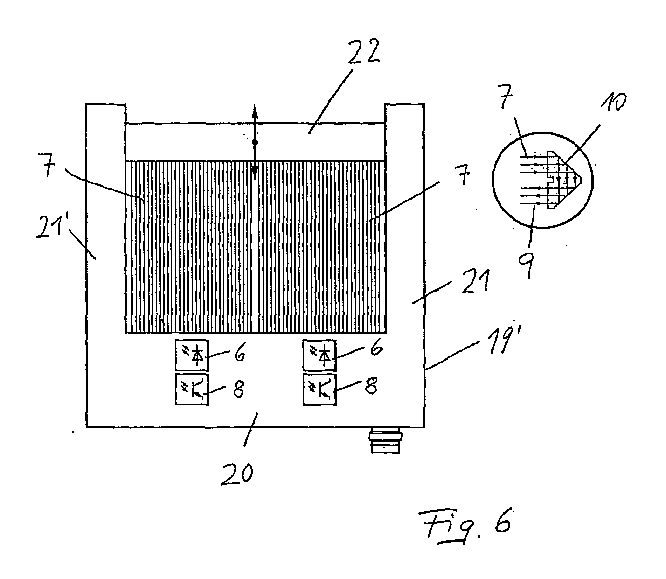

Figur 6 verdeutlicht eine Anordnung eines Gehäuses 19', das mit einem weiteren zweiten Schenkel 21' versehen ist, sodass das Gehäuseteil 22 an seinen beiden Enden in den zweiten Schenkeln 21, 21' geführt ist, während die Elektronik der Lichtschranke in dem ersten Schenkel 20 angeordnet ist.

In Figur 6 sind zwei Sender 6 vorgesehen, deren ausgesandter Lichtstrahl durch eine (nicht dargestellte) Linsenanordnung flächig aufgeweitet worden ist, sodass sich ein flächiger Lichtstrahl ergibt, der sich in Figur 5 in der Zeichenebene erstreckt. Die in dem Gehäuseteil 22 vorhandene Umlenkoptik 10, die in Figur 6 schematisch separat dargestellt ist, ist so angeordnet, dass der einfallende primäre Lichtstrahl 7 in der Darstellung der Figur 6 nach unten, also unterhalb der Zeichenebene umgelenkt und als sekundärer flächiger Lichtstrahl 9 zum ersten Schenkel 20 zurückgeleitet wird, wo die beiden sekundären Lichtstrahlen 9 auf jeweils einen Empfänger 8 auftreffen, wobei die Aufweitung des Lichtstrahls 7, 9 durch eine entsprechende Fokussieroptik rückgängig gemacht werden kann.

Die Anordnung der Figur 6 erlaubt eine Detektion von durch die rechteckige Innenfläche des Gehäuses 19' hindurch tretende Gegenstände, beispielsweise zu Zählzwecken.

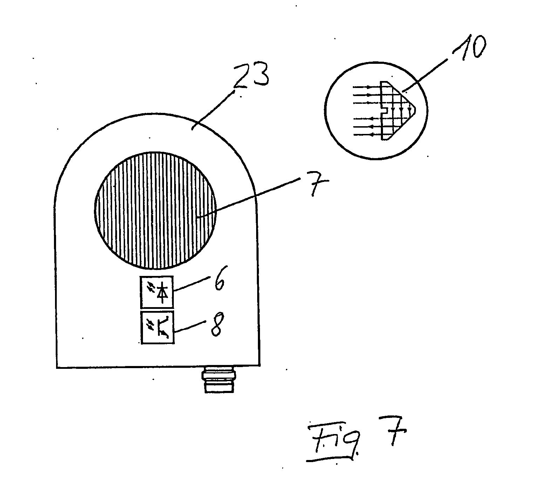

Eine ähnliche Anordnung ergibt sich für einen Ringdetektor, wie er in Figur 7 dargestellt ist. Der primäre Lichtstrahl 7 eines Senders 6 ist auch hier flächig aufgeweitet worden, wobei in Figur 7 nur der den inneren Freiraum einer Ringblende 23 ausfüllende Teil des primären Lichtstrahls 7 erkennbar ist. Am dem Sender 6 gegenüberliegenden Ende der Ringblende 23 ist die in Figur 7 separat dargestellte Umlenkoptik 10 vorgesehen, die den einfallenden primären Lichtstrahl 7 mit einem Totalreflektionsprisma nach unten umlenkt, sodass ein entsprechender flächiger sekundärer Lichtstrahl 9 unterhalb der Zeichenebene in Figur 7 auf den unter dem Sender 6 angeordneten Empfänger 8 zurückgeleitet wird. Auch diese Lichtschranke dient zur Zählung aller Gegenstände, die durch den Innenraum der Lochblende 23 durchfallen. Dabei kommt es ersichtlich nicht auf das Material der Gegenstände an, sodass - im Unterschied zu üblichen Ringsensoren - alle Gegenstände unabhängig von ihrem Material detektiert werden können.

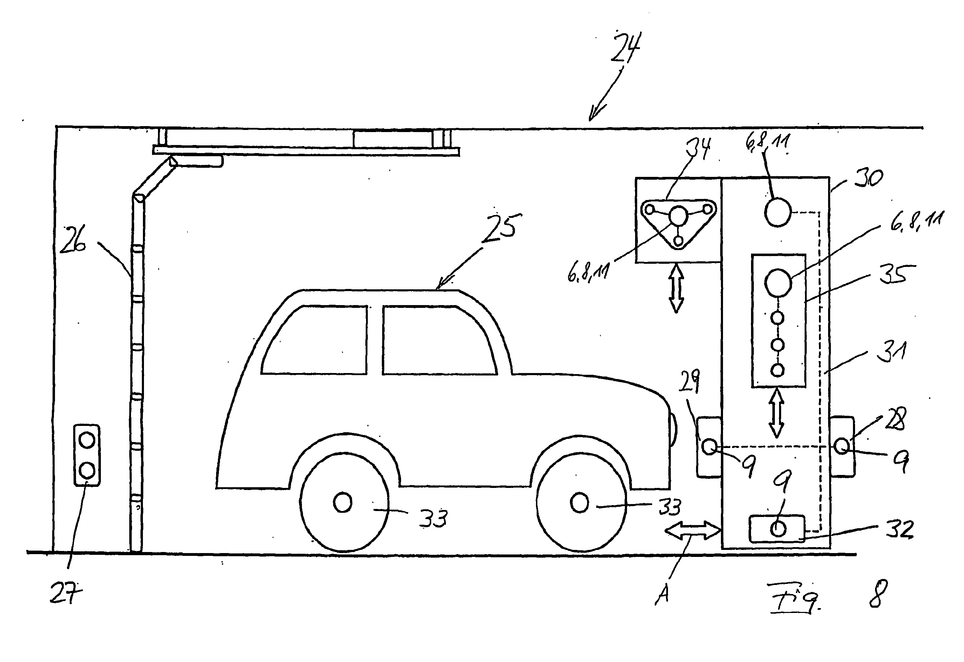

Figur 8 zeigt schematisch eine Autowaschanlage 24 mit einem darin befindlichen Auto 25. Zum Einfahren des Autos 25 in die Autowaschanlage 24. wird ein am Eingang der Autowaschanlage 24 befindliches Rolltor 26 geöffnet, und zwar mittels einer Lichtschranke 27 mit der das Vorhandensein eines Autos 25 vor der Autowaschanlage 24 detektiert wird. Die Positionierung des Autos 25 in der Autowaschanlage 24 erfolgt mit-Hilfe von Lichtschrankendetektoren 28, 29, die sich an einem Trägergestell 30 befinden, das auf Schienen in der Längsrichtung der Autowaschanlage 24 verfahrbar ist, wie dies durch einen Doppelpfeil A angedeutet ist. Das Trägergestell besteht aus zwei seitlichen, verfahrbaren Ständern 31, die beiderseits des Autos 25 auf Schienen, Rollen o. dgl. gelagert sind. An ihrem unteren Ende weisen die Ständer 31 einen Lichtschrankendetektor 32 für die Detektion der Position von Rädern 33 des Autos 25 auf.

Die oberen Enden der Ständer 31 sind durch eine (nicht dargestellte) Traverse miteinander verbunden, sodass das Trägergestell die Form eines umgekehrten U aufweist. Die Traverse ist so hoch angebracht, dass Autos 25 mit einer maximal zulässigen Gesamthöhe von dem Trägergestell 30 seitlich und oben überfahrbar sind.

Während für den Waschvorgang, beispielsweise mit rotierenden Bürsten, die Abtastung der Kontur des Autos 25 über eine Druckmessung an den Bürstenhalterungen erfolgt, ist für die anschließende Trocknung ein Kontakt mit dem Auto 25 nicht erwünscht. Demzufolge wird die Kontur des Autos 25 mit Hilfe von Lichtschrankendetektoren 34 oder 35 abgetastet. Beide Lichtschrankendetektoren sind in der Höhe verfahrbar an dem Trägergestell 30 angeordnet, sodass sie insbesondere die obere Kontur des Autos 25 beim axialen Verfahren des Trägergestells 30 am Auto 25 entlang die für die Trocknung erforderliche obere Kontur des Autos 25 ermitteln können. Daraus wird deutlich, dass in einer Autowaschanlage 24 nicht zugleich die Lichtschrankendetektoren 34 und 35 vorhanden sein müssen, da einer der beiden Lichtschrankendetektoren 34, 35 regelmäßig ausreichend ist.

Erfindungsgemäß ist für die verschiedenen Lichtschrankendetektoren, die in Figur 8 dargestellt sind, eine vorteilhafte Ausnutzung der vorliegenden Erfindung vorgesehen.

In der Ansicht der Figur 8 möge sich die erste Seite hinter dem Auto 25 befinden. Auf dieser Seite befinden sich Sender 6, Empfänger 8 und Auswerte- und Regelstufe 11, die hier schematisch in einem Kreis angedeutet sind. Mittels des Senders 6 wird ein primärer Lichtstrahl auf die zweite Seite, die in Figur 8 vor dem Auto 25 liegt, übertragen, wobei diese Übertragung auch in der Traverse des Trägergestells 30 stattfinden kann, sodass Intensitätsverluste durch Luftfeuchtigkeit, Wassertropfen o. ä. vermieden werden können.

Auf der zweiten Seite erfolgt eine Aufteilung des primären Lichtstrahls mittels der (nicht dargestellten) Optik in drei sekundäre Lichtstrahlen 9, mit denen die Lichtschrankendetektoren 28, 29 und 32 gebildet werden. Die sekundären Lichtstrahlen 9 bilden die Lichtschrankenfunktionen und gelangen über die zwischen den. Ständern 31 verlaufende (nicht dargestellte) Lichtstrecke 1 zu den auf der ersten Seite angeordneten Empfängern 8.

In entsprechender Weise ist die Anordnung für den Lichtschrankendetektor 34 und den Lichtschrankendetektor 35 vorgesehen.

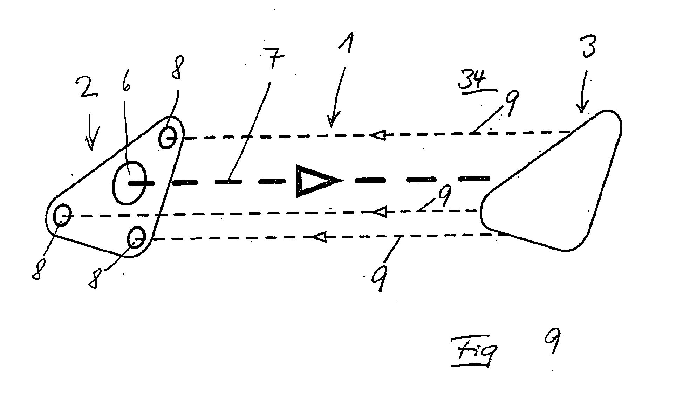

Figur 9 verdeutlicht schematisch den Aufbau des Lichtschrankendetektors 34. Dieser weist auf der ersten Seite 2. der Lichtstrecke 1, die sich in Figur 7 von hinter dem Auto 25 bis vor das Auto zur zweiten Seite 3 erstreckt, einen Sender 6 auf, der einen primären Lichtstrahl 7 auf die zweite Seite 3 aussendet. Auf der zweiten Seite 3 findet eine Aufteilung des primären Lichtstrahls 7 in drei sekundäre Lichtstrahlen 9 statt, die sich an den drei Ecken eines dreieckigen Gehäuses befinden. Die drei sekundären Lichtstrahlen 9 gelangen über die Lichtstrecke 1 auf die erste Seite 2 zurück und treffen dort auf die Empfänger 8 auf.

Vorzugsweise dienen die drei sekundären Lichtstrahlen 9 als Messstrahlen für die Lichtschrankenfunktion, die hier zur Abtastung der oberen Kontur des Autos 25 eingesetzt wird.

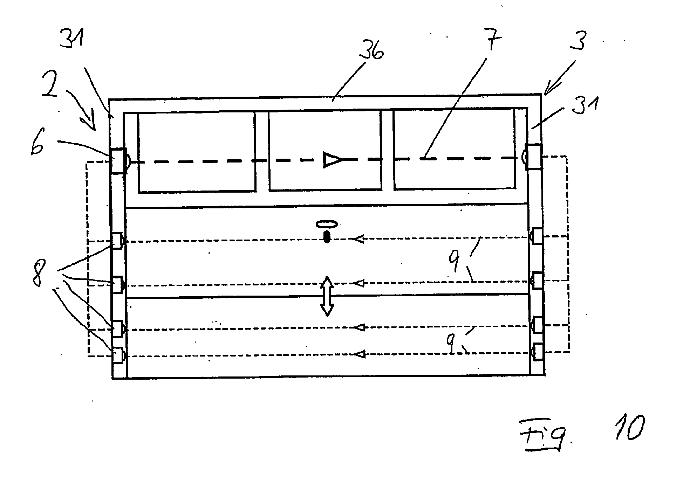

Figur 10 verdeutlicht die Anordnung beispielsweise des Lichtschrankendetektors 35, mit dem ebenfalls die Kontur des Autos 25 abgescannt werden kann.

In dem Träger 31 auf der ersten Seite 2 befinden sich Sender 6 und Empfänger 8 mit den zugehörigen Optiken. Schematisch ist dargestellt, dass der von dem Sender innerhalb der Traverse 36 des Trägergestells 30 ausgesandte primäre Lichtstrahl 7 auf der zweiten Seite 3 umgelenkt und zu vier sekundären Lichtstrahlen 9 aufgeteilt wird. Die vier sekundären Lichtstrahlen 9 werden von Empfängern 8 auf der ersten Seite 2 empfangen, sofern durch das Auto 25 die sekundären Lichtstrahlen 9 nicht unterbrochen worden sind. Mit Hilfe der (nicht dargestellten) Auswerte- und Regelstufe 11 wird die ermittelte Kontur in ein Steuersignal für die mit Abstand über der oberen Kontur des Autos 25 geführten Trocknungsdüse umgewandelt.

Es ist ersichtlich, dass durch die vorgenommene Aufteilung des Lichtstrahls in mehrere sekundäre Lichtstrahlen 9 mit einer einzigen Lichtschranke, d. h. mit einer einzigen Auswerte- und Regelstufe 11 mehrere Funktionen erfüllt werden können, da mehrere Messstrahlen zur Verfügung stehen. Dabei besteht der Vorteil, dass die Elektronik nur auf der ersten Seite 2 vorhanden sein muss, sodass keine Signalleitungen oder elektrische Versorgungsleitungen von der ersten Seite 2 zur zweiten Seite 3 oder umgekehrt geführt werden müssen.

Aufgrund der Auswerte- und Regelstufe 11 kann dabei auf der ersten Seite 2 die Intensität des vom Sender 6 ausgesandten primären Strahls 7 so geregelt werden, dass immer gut auswertbare sekundäre Lichtstrahlen 9 von den Empfängern 8 empfangen werden.

## Patentansprüche

1. Lichtschranke mit wenigstens einem Sender (6) und wenigstens einem Empfänger (8) für einen Lichtstrahl und mit einer Lichtstrecke (1), die zwischen einer ersten Seite (2) und einer zweiten Seite (4) eines zu überwachenden Bereichs verläuft, wobei sich Sender (6) und Empfänger (8) auf der ersten Seite (2) befinden und auf der zweiten Seite (4) eine den von dem Sender ausgesandten primären Lichtstrahl (7) aufnehmende Optik (10) angeordnet ist, mit der der primäre Lichtstrahl (7) umgelenkt und als von dem primären Lichtstrahl (7) separater sekundärer Lichtstrahl (9) mit Abstand zu dem primären Lichtstrahl (7) über die Lichtstrecke (1) zur ersten Seite (2) auf den Empfänger (8) zurückgesandt wird, **dadurch gekennzeichnet, dass** der Abstand zwischen den beiden Seiten (2, 4) der Lichtstrecke (19) veränderbar ist und dass beide Seiten (2, 4) der Lichtstrecke (1) auf Schenkeln (20, 22) eines gemeinsamen Gehäuses (19, 19') implementiert sind, deren Abstand voneinander variierbar ist.

2. Lichtschranke nach Anspruch 1, wobei die auf der zweiten Seite (4) angeordnete Optik (10) eine Fokussierungseinrichtung für den sekundären Lichtstrahl aufweist.

3. Lichtschranke nach Anspruch 1, wobei die Optik (10) eine Aufweitungseinrichtung zur Ausbildung eines aufgeweiteten sekundären Lichtstrahls (9) enthält.

4. Lichtschranke nach einem der Ansprüche 1 bis 3, wobei vor dem Empfänger (8) auf der ersten Seite (2) eine Sammellinsenanordnung vorgesehen sind.

5. Lichtschranke nach einem der Ansprüche 1 bis 4, wobei der Empfänger (8) als flächig empfindlicher Empfänger ausgebildet ist.

6. Lichtschranke nach einem der Ansprüche 1 bis 5, wobei nur der sekundäre Lichtstrahl (9) zur Überwachung des Bereichs angeordnet ist.

7. Lichtschranke nach einem der Ansprüche 1 bis 5, wobei nur der primäre Lichtstrahl (7) zur Überwachung des Bereichs angeordnet ist.

8. Lichtschranke nach einem der Ansprüche 1 bis 5, wobei sowohl der primäre Lichtstrahl (7) als auch der sekundäre Lichtstrahl (9) zur Überwachung des Bereichs angeordnet sind.

9. Lichtschranke nach einem der Ansprüche 1 bis 8, wobei die umlenkende Optik (10) wenigstens einen Strahlteiler zur Ausbildung wenigstens zweier, räumlich voneinander getrennter sekundärer Lichtstrahlen (9) enthält.

10. Lichtschranke nach einem der Ansprüche 1 bis 8, wobei die umlenkende Optik (10) zum Empfang wenigstens zweier primärer Lichtstrahlen (7) angeordnet und zur Zusammenführung der mehreren primären Lichtstrahlen (7) zu einem sekundären Lichtstrahl (9) ausgebildet ist.

11. Lichtschranke nach einem der Ansprüche 1 bis 10, wobei auf der ersten Seite (2) eine Auswerte- und Regelstufe (11) angeordnet ist, mit der die Intensität des vom Sender (6) ausgesandten Primärstrahls (7) in Abhängigkeit von der Intensität des vom Empfänger (8) empfangenen Sekundärstrahls (9) steuerbar ist.

12. Lichtschranke nach einem der Ansprüche 1 bis 11, wobei der Empfänger (8) aus einer Mehrzahl von Teilempfängern für jeweils einen sekundären Lichtstrahl (9) besteht.

13. Lichtschranke nach einem der Ansprüche 1 bis 12, wobei sich auf der ersten Seite (2) am Sender (6) eine Aufweitungsoptik befindet und dass der aufgeweitete primäre Lichtstrahl (7) auf der zweiten Seite (4) vor seiner Umlenkung eines Sammeloptik durchläuft, durch die er zu einem schmalen Lichtstrahl zusammengefasst wird.

## Claims

1. A light barrier having at least one transmitter (6) and at least one receiver (8) for a light beam, and having a light path (1) that runs between a first side (2) and a second side (4) of a region to be monitored, the transmitter (6) and receiver (8) being situated on the first side (2), and an optical system (10) that picks up the primary light beam (7) emitted by the transmitter being arranged on the second side (4), which deflects the primary light beam (7) and returns it to the receiver (8) via the light path (1) to the first side (2) as a secondary light beam (9), which is separate from the primary light beam (7), at a distance from the primary light beam (7), **characterized in that** the distance between the two sides (2, 4) of the light path (19) is variable and **in that** the two sides (2, 4) of the light path (1) are implemented on limbs (20, 22) of a common housing (19, 19') whose distance from one another is variable.

2. The light barrier according to claim 1, wherein the optical system (10) arranged on the second side (4) has a focusing device for focusing the secondary light beam.

3. The light barrier according to claim 1, wherein the optical system (10) includes an expanding device for forming an expanded secondary light beam (9).

4. The light barrier according to one of claims 1 to 3, wherein a converging lens arrangement is provided upstream of the receiver (8) on the first side (2).

5. The light barrier according to one of claims 1 to 4, wherein the receiver (8) is designed as a receiver sensitive in two dimensions.

6. The light barrier according to claims 1 to 5, wherein only the secondary light beam (9) is arranged for the purpose of monitoring the region.

7. The light barrier according to claims 1 to 5, wherein only the primary light beam (7) is arranged for the purpose of monitoring the region.

8. The light barrier according to one of claims 1 to 5, wherein both the primary light beam (7) and the secondary light beam (9) are arranged for the purpose of monitoring the region.

9. The light barrier according to one of claims 1 to 8, in which the deflecting optical system (10) includes at least one beam splitter for forming at least two secondary light beams (9) spatially separated from one another.

10. The light barrier according to one of claims 1 to 8, wherein the deflecting optical system (10) is arranged for the purpose of receiving at least two primary light beams (7) and of combining the plurality of primary light beams (7) to form a secondary light beam (9).

11. The light barrier according to one of claims 1 to 10, wherein arranged on the first side (2) is an evaluation and control stage (11) with the aid of which the intensity of the primary beam (7) emitted by the transmitter (6) can be controlled as a function of the intensity of the secondary beam (9) received by the receiver (8).

12. The light barrier according to one of claims 1 to 11, wherein the receiver (8) comprises a plurality of receiver elements for in each case one secondary light beam (9).

13. The light barrier according to one of claims 1 to 12, wherein an expanding optical system is located on the transmitter (6) on the first side (2), and in that before being deflected the expanded primary light beam (7) traverses on the second side (4) a converging optical system by which it is condensed to form a narrow light beam.

## Revendications

1. Barrière lumineuse comprenant au moins un émetteur (6) et au moins un récepteur (8) pour un faisceau lumineux, et comprenant un trajet lumineux (1) qui s'étend entre un premier côté (2) et un deuxième côté (4) d'une région à surveiller, émetteur (6) et récepteur (8) se trouvant du premier côté (2), et une optique (10) recevant le faisceau de lumière primaire (7) émis par l'émetteur étant agencée du deuxième côté (4), avec laquelle le faisceau de lumière primaire (7) est dévié et renvoyé le long du trajet lumineux (1) vers le premier côté (2) sur le récepteur (8) en tant que faisceau de lumière secondaire (9) séparé du faisceau de lumière primaire (7) et espacé du faisceau de lumière primaire (7), **caractérisée en ce que** la distance entre les deux côtés (2, 4) du trajet lumineux (19) est modifiable, et **en ce que** les deux côtés (2, 4) du trajet lumineux (1) sont mis en place sur des branches (20, 22) d'un boîtier commun (19, 19') et dont l'écart l'une par rapport à l'autre est variable.

2. Barrière lumineuse selon la revendication 1, dans laquelle l'optique (10) agencée du deuxième côté (4) présente un dispositif de focalisation pour le faisceau lumineux secondaire.

3. Barrière lumineuse selon la revendication 1, dans laquelle l'optique (1) contient un dispositif d'élargissement pour former un faisceau lumineux secondaire (9) élargi.

4. Barrière lumineuse selon l'une quelconque des revendications 1 à 3, dans laquelle un assemblage de lentille de rétrécissement est prévu du premier côté (2) devant le récepteur (8).

5. Barrière lumineuse selon l'une quelconque des revendications 1 à 4, dans laquelle le récepteur (8) est un récepteur sensible sur une surface.

6. Barrière lumineuse selon l'une quelconque des revendications 1 à 5, dans laquelle seul le faisceau lumineux secondaire (9) est agencé pour la surveillance de la région.

7. Barrière lumineuse selon l'une quelconque des revendications 1 à 5, dans laquelle seul le faisceau lumineux primaire (7) est agencé pour la surveillance de la région.

8. Barrière lumineuse selon l'une quelconque des revendications 1 à 5, dans laquelle aussi bien le faisceau lumineux primaire (7) que le faisceau lumineux secondaire (9) sont agencés pour la surveillance de la région.

9. Barrière lumineuse selon l'une quelconque des revendications 1 à 8, dans laquelle l'optique (10) de déviation contient au moins un séparateur de faisceau pour former au moins deux faisceaux lumineux secondaires (9) séparés spatialement l'un de l'autre.

10. Barrière lumineuse selon l'une quelconque des revendications 1 à 8, dans laquelle l'optique (10) de déviation est agencée pour recevoir au moins deux faisceaux lumineux primaires (7) et est formée pour réunir les plusieurs faisceaux lumineux primaires (7) en un faisceau lumineux secondaire (9).

11. Barrière lumineuse selon l'une quelconque des revendications 1 à 10, dans laquelle un étage de régulation et d'exploitation (11) est agencé du premier côté (2), grâce auquel on peut piloter l'intensité du faisceau primaire (7) émis par l'émetteur (6) en fonction de l'intensité du faisceau secondaire (9) reçu par le récepteur (8).

12. Barrière lumineuse selon l'une quelconque des revendications 1 à 11, dans laquelle le récepteur (8) consiste en plusieurs récepteurs partiels chacun pour l'un des faisceaux lumineux secondaires (9).

13. Barrière lumineuse selon l'une quelconque des revendications 1 à 12, dans laquelle une optique d'élargissement se trouve du premier côté (2) sur l'émetteur (6), et en ce que le faisceau lumineux primaire (7) élargi traverse, du deuxième côté, avant sa déviation, une optique de rétrécissement grâce à laquelle il se rassemble en un faisceau lumineux étroit.
